# DEMANDE DE BREVET EUROPEEN

(11) **EP 0 879 629 A1**
(43) Date de publication de la demande: **25.11.1998**
(21) Numéro de dépôt: 98870069.6
(22) Date de dépôt: 03.04.1998
(51) Int. Cl.: B01D 37/02, B01J 20/32

(54) **Aide de filtration régénérable, procédé de production d'une telle aide et son utilisation**

(30) Priorité: 10.04.1997 BE 9700331
(71) Demandeur: Meura S.A., 7500 Tournai (BE); Université de Liège, B-4000 Liège (BE)
(72) Inventeur: Zgoulli, Slim, 4031 Angleur (BE); Thonart, Philippe, 5081 La Bruyiere (BE); Harmegnies, Frédérique, 7000 Mons (BE); Bonacchelli, Bruno, 4130 Mery (BE); Tigel, Rafael, 1342 Limelette (BE)
(74) Mandataire: Van Malderen, Michel

(57) **Abrégé**

La présente invention concerne une aide de filtration régénérable caractérisée en ce qu'elle est constituée de microbilles (verre ou polymère) et/ou de fibres de polymères (cellulose par exemple) enrobées par un polymère insoluble en phase aqueuse, en particulier dans un liquide alimentaire.

La présente invention est également relative à un procédé de préparation de ladite aide de filtration et à son utilisation.

## Description

### Objet de l'invention

La présente invention concerne une aide de filtration (quelquefois également qualifiée d'adjuvant) qui soit régénérable.

L'invention porte également sur le procédé de production d'une telle aide par une technique d'atomisation et sur l'utilisation de l'aide pour la filtration de liquides alimentaires.

Le terme "filtration" doit s'entendre au sens large, comme s'appliquant à toutes les techniques de filtration, y compris les opérations quelquefois qualifiées de "clarification" de liquides alimentaires tels que le vin, la bière, des boissons non alcoolisées, en particulier les produits obtenus par fermentation dont on doit extraire les résidus cellulaires, notamment de levure. Parfois, on réalise selon l'état de la technique, une stabilisation simultanée à la clarification par ajout d'un agent de stabilisation à l'aide filtrante (par exemple des fibres de polyvinylpolypyrrolidone pour la bière)

### Arrière-plan technologique à la base de l'invention

Dans l'industrie alimentaire notamment, on a recours à des techniques de filtration et de clarification de liquides, généralement sur des filtres à alluvionnage, et on utilise à cet effet classiquement des adjuvants ou et on utilise à cet effet classiquement des adjuvants ou aides de filtration tels que le kieselguhr, qui sont habituellement non régénérables, ou du moins difficilement régénérables.

On a déjà également proposé d'autres adjuvants à base de fibres de cellulose ou encore de billes de verre, dont le comportement n'est cependant pas satisfaisant, notamment parce que la densité, en particulier dans le cas de billes de verre, pose des problèmes lors de la filtration et de la régénération.

La présente invention utilse de préférence une technique d'atomisation assez similaire à celle décrite dans les documents US-5 456 985 ou EP-0462003-B1 dont il est question ci-après, mais qui a été bien entendu modifiée au niveau des constituants des microcapsules, et notamment du matériau d'enrobage en vue de permettre sa transposition pour qu'elle convienne pour la production d'aides ou adjuvants de filtration. Le recours à cette technique ne présente bien entendu pas de caractère exhaustif.

Dans le document US-5456985 (EP-0462003-B1), on a décrit une technique de production de microcapsules, constituées par des microparticules sphériques formées d'une enveloppe d'un matériau d'enrobage gastro-résistant constituant le réservoir de liquide huileux qu'elle contient. Cette technique est destinée à l'industrie pharmaceutique et repose sur un séchage par atomisation d'une émulsion du type huile-dans-l'eau obtenue à partir dudit liquide huileux et d'une solution aqueuse de polymères de matériaux d'enrobage comportant au moins un polymère d'enrobage gastro-résistant en mélange avec au moins un agent émulsifiant.

Dans le document EP 0 483099 A1, on décrit les adjuvants de filtration améliorés convenant pour la brasserie, constitués de billes sphériques de granulométrie non aléatoires, ce qui permet d'éviter le recours à une précouche lors de la filtration.

Le document EP 0 460 499 A2 vise à remplacer l'utilisation des adjuvants de filtration classique du type kieselguhr, perlite, fibres de cellulose par des produits conservant leur structure filtrante et qui sont recyclables. On propose un produit à deux constituants, l'un étant des particules de métal, d'oxyde métallique ou de carbone, l'autre étant un constituant formant le gâteau de filtration en fibres de matière synthétique ou de cellulose.

Dans le document DE 44 03 359 A1, on décrit un adjuvant de filtration de microperles sphériques non poreuses de verre.

Dans le document EP 0246 241 B1, on décrit une technique dans laquelle on mélange un procédé de post-stabilisation et de clarification simultanée de liquides contenant des polyphénols ou des protéines, tels que des boissons et en particulier de la bière. Selon cette technique, on mélange ensemble un agent de stabilisation et un adjuvant de filtration.

### Buts de l'invention

La présente invention vise spécifiquement à proposer une aide de filtration d'un type nouveau qui convienne pour l'usage envisagé et qui permette en particulier de le régénérer facilement.

### Eléments caractéristiques de l'invention

La présente invention repose sur l'observation du fait que la microencapsulation de microbilles ou de fibres constituées essentiellement de verre ou de polymères par un polymère hydrophobe modifie la structure et la porosité de surface du substrat et par conséquent améliore le pouvoir filtrant de l'aide de filtration et permet sa régénération.

L'invention porte plus spécifiquement sur l'aide de filtration définie à la revendication 1.

Cette amélioration des propriétés filtrantes est obtenue sans inconvénient majeur résultant d'un effet secondaire, et notamment sans interférence et sans modification du processus de filtration, tout en étant aisément régénérable.

On peut obtenir ces produits par une technique d'atomisation en formant un produit fini se présentant sous forme d'une poudre, le substrat, en particulier les microbilles, présentant une meilleure résistance mécanique et une adaptation favorable de la porosité.

Avantageusement, le polymère hydrophobe est de l'éthylcellulose, du carboxyméthylcellulose ou du polyéthylène. L'éthylcellulose convient particulièrement bien du fait qu'il est facilement soluble dans les solvants comme le dichlorométhane, ce qui, ainsi qu'il apparaîtra plus loin, favorise sa mise en oeuvre dans un processus d'atomisation.

Il convient de noter que le produit selon l'invention tel qu'il a été défini par ses constituants n'exclut pas la possibilité d'incorporer d'autres constituants, tel que de la cellulose, des fibres de polymères (PE, PP) dans la matière d'enrobage.

La régénération s'effectue de manière particulièrement simple par lavage en maintenant les caractéristiques de filtrabilité, et ceci sans entraîner de contamination, en particulier lors du recyclage de l'aide de filtration régénérée.

Le lavage peut s'effectuer de manière classique à l'aide de solutions alcalines, neutres ou acides, éventuellement en présence d'enzymes.

L'aide filtrante est de préférence obtenue par une technique d'atomisation adaptée au produit, qui sera décrite plus en détails ci-après.

Après lavage, l'aide filtrante est récupérée par simple décantation sous forme d'une suspension que l'on peut éventuellement concentrer avant de la recycler.

L'utilisation dans l'industrie alimentaire d'adjuvants de filtration est bien connue, et est notamment utilisée pour réduire la charge en micro-organismes dans des liquides de fermentation tels que la bière ou le vin ou encore dans des liquides alimentaires non alcooliques, en particulier pour retirer les colloïdes et éviter ainsi le colmatage du support filtrant.

Pour ce qui concerne le choix de l'aide de filtration, il convient bien entendu de garder à l'esprit qu'un critère important est celui de la densité réelle et de la granulométrie du produit qui sera obtenu. Il existe sur le marché un grand choix, notamment de billes de verre pleines ou creuses, qui permettent de réaliser ce choix.

Habituellement, la taille des particules de l'aide filtrante varie de 1 à 150 micromètres, préférentiellement de 20 à 80 micromètres.

Pour ce qui concerne le choix de la matière constituant le substrat recevant l'enrobage, conviennent, en plus des billes de verre pleines ou creuses en fonction de la densité désirée, des billes de polyoléfine, par exemple des billes de polyéthylène.

Par un choix approprié du produit d'enrobage, il devient possible de conférer une charge positive aux particules constituant l'aide filtrante, propriété particulièrement avantageuse pour éviter l'agglutination desdites particules qui auront tendance à se repousser mutuellement sous l'effet de leur charge.

Le choix d'une forme particulière de substrat recevant l'enrobage, qui résulte essentiellement du type de substrat utilisé, dépend essentiellement de l'importance que l'on confère soit à la résistance mécanique, soit à l'efficacité du processus de filtration. De manière générale, la forme sphérique a tendance à présenter une meilleure résistance mécanique tandis que la forme fibreuse permet d'accroître les caractéristiques de filtrabilité.

Il convient de noter que l'enrobage peut être partiel ou total, l'enrobage partiel étant généralement préféré du fait que les produits présentent une porosité améliorée comparée à un produit à enrobage total ou pratiquement total.

L'enrobage partiel ou total se réalise aisément en agissant sur les proportions relatives du substrat et du produit d'enrobage, étant entendu que des adjonctions d'autres ingrédients peuvent influencer diverses propriétés, telle que la porosité.

La technique d'atomisation est celle décrite dans son principe dans le document EP-0462003-B1 précité. L'enrobage, dans cette technique, s'effectue en une seule étape et présente l'avantage de permettre simultanément dans le matériau hydrophobe d'enrobage la présence d'autres constituants, en particulier de cellulose, tout en préservant les propriétés de régénérabilité.

Il convient de noter que la simple utilisation conjointe d'une part de billes de verre non enrobées et d'autre part d'un produit qui, selon l'invention, sert d'enrobage, ne permet pas d'atteindre l'efficacité de filtration des produits qui, selon l'invention, comportent l'enrobage hydrophobe sur le substrat.

L'intérêt économique d'une aide de filtration selon l'invention, qui est bien entendu plus onéreuse que les adjuvants de filtration non régénérables classiques, est déjà facilement réalisé dès que le support de filtration selon l'invention permet environ 10 régénérations successives.

On observe que dans la plupart des cas, on réalise sans difficulté et sans perte d'efficacité de 15 à 50 opérations de régénération sans modification substantielle des propriétés.

De préférence, l'aide filtrante présente une densité réelle de 0.9 à 2 et une résistance mécanique suffisante permettant au moins 10 opérations de régénération.

De préférence, les constituants de l'aide de filtration (microbilles ou fibres microencapsulées) sont utilisés avec d'autres constituants tels que des fibres de cellulose, ces constituants complémentaires étant impliqués dans le processus d'atomisation de façon à obtenir un mélange homogène des substrats microencapsulés avec des fibres de cellulose non enrobées, ce qui entraîne une meilleure dispersibilité dans un liquide lors de la filtration.

Le procédé de préparation de l'aide filtrante régénérable selon l'invention implique un séchage par atomisation (spray drying) du substrat et de l'agent d'enrobage dans un solvant volatil, de préférence le dichlorométhane, dans une phase aqueuse contenant éventuellement d'autres ingrédients tels que des fibres de cellulose ou de polymères.

La technique comporte la mise en oeuvre d'une solution organique de polymères hydrophobes contenant de 1 à 10, et de préférence 1,4 à 10% en poids de polymères. La limite inférieure est essentiellement guidée par un choix économique et la limite supérieure par les propriétés de mise en solution dans le solvant organique. Cette solution contient également entre 22 et 25% en poids de microbilles, et de préférence entre 7 et 20% en poids de fibres de cellulose.

La phase aqueuse contient de préférence entre 1 et 15 % en poids de fibres, notamment de fibres de cellulose.

De préférence, on réalise un premier mélange de la solution de polymère hydrophobant avec les billes de verre par exemple et les fibres de cellulose et un deuxième mélange de fibres (de cellulose par exemple) avec de l'eau puis on mélange lesdits premier et deuxième mélanges entre eux.

Selon l'invention, la dispersion est réalisée à l'aide d'un mixer à pales.

Selon une forme d'exécution préférée de l'invention, on effectue le séchage par atomisation à l'aide d'un atomiseur, d'une dispersion de type (bille de verre, fibre de cellulose dans une solution organique de polymère), dans une solution aqueuse de cellulose.

Le procédé selon l'invention implique donc la mise en oeuvre d'un dispositif de séchage par atomisation. Ces dispositifs sont bien connus. Ils sont composés par exemple d'une haute tour dans laquelle une solution liquide, en l'occurrence la dispersion, est finement pulvérisée par passage au travers d'une buse ou d'une turbine. Les gouttelettes formées traversent un flux d'air établi à co-courant ou contre-courant et porté à une température contrôlée notamment de 180 °C à l'entrée et de 90 °C à la sortie de l'atomiseur. La poudre constituée de microcapsules et de fibres est récupérée à la base du cyclone.

La microencapsulation et le séchage de l'aide de filtration sont réalisés en une seule étape et peuvent être menés en continu sur des lots importants.

La présentation du produit fini obtenu selon le procédé est une poudre constituée des microparticules de verre ou de polymère encapsulées et des fibres et dont la taille est de 1 à 150 µm, préférentiellement de 20 à 80 µm.

Les techniques de filtration sont diverses et se classent en trois catégories selon le mode de rétention des impuretés : la filtration directe sur un support filtrant (plaques, membranes), la filtration tangentielle (membranes organiques, céramiques), la filtration avec aide filtrante. Dans cette dernière technique, la rétention des particules se réalise par le passage de la suspension à filtrer au travers d'un gâteau filtrant.

L'invention s'applique à ce type de filtration. L'aide filtrante peut être utilisée en précouche (filtre discontinu sous vide, filtre à cartouche) et/ou en alluvionnage (filtres à plaques, filtre à plateaux, filtres à bougies).

Selon une forme préférée de l'invention, on réalise un dépôt préalable à la filtration d'une précouche d'aide filtrante sur le support filtrant, de façon à assurer la clarté optimale du filtrat dès le début de la filtration.

Ensuite, une quantité supplémentaire d'aide filtrante (alluvionnage) est déposée sur la précouche en même temps que la matière à filtrer, afin de retarder au maximum le moment où l'aide filtrante est saturée en impuretés.

Selon l'invention, la quantité de l'aide filtrante utilisée en précouche est de 500 à 3000 g/m² de surface de filtration et la quantité d'alluvionnage est de 50 à 400 g/hl.

Les domaines d'application visés préférentiellement par l'invention sont la filtration de la bière, du vin, etc., pour n'importe quel type de filtre mettant en oeuvre l'aide filtrante.

La régénération d'aide filtrante de filtration est intéressante pour des raisons économiques mais aussi écologiques. La régénération de l'aide filtrante permet de diminuer le coût de production de la filtration, surtout pour des produits alimentaires à faible valeur ajoutée, et d'éviter le rejet de résidus solides de filtration.

Selon l'invention, l'étape de régénération commence par un lavage à l'eau à 80 °C afin d'éliminer une partie des colloïdes et d'autres impuretés.

La régénération peut comporter l'utilisation d'un bac de régénération, celui-ci consiste en un réacteur/décanteur agité. Le gâteau ainsi débâti du filtre est mis en suspension, après un temps de mélange et d'homogénéisation, selon l'invention, on laisse la suspension décanter pendant un temps optimalisé. Selon l'invention, l'étape de décantation provoque une séparation importante de ses constituants, par exemple, la séparation des levures est estimée de 60 à 90% dans le surnageant. Selon l'invention, l'adjuvant est ensuite remis en suspension et traité avec une solution de soude caustique à environ 2% à 80 °C pendant minimum 1h30.

Selon l'invention, on propose la neutralisation de l'adjuvant par une solution acide (H₃PO₄ à 0.5%) après un rinçage à l'eau. L'aide de filtration est ensuite remise en suspension par une nouvelle utilisation.

Dans le cas d'une régénération difficile ou incomplète, un traitement supplémentaire de l'adjuvant peut être nécessaire, soit par une décantation supplémentaire, soit par l'utilisation d'enzyme afin d'éliminer complètement les levures.

L'invention sera décrite plus en détails en référence à une forme d'exécution décrite à titre d'illustration sans caractère limitatif.

### Exemple 1 : atomisation d'une dispersion dans une solution d'éthylcellulose, dichlorométhane, billes de verre et fibres de cellulose

### 1) Matériel

- éthylcellulose
- dichlorométhane
- billes de verre
- fibre de cellulose
- mixer à pales (IKA)
- Atomiseur PC3 (Niro Atomiseur)

### 2) Méthode

### 2.1. Composition des dispersions

| **Ingrédients** | **Poids (g)** | **%** |
|---|---|---|
| Ethylcellulose | 100 | 1.13 |
| Solvant | 2500 | 28.40 |
| Billes de verre (44-88 µm) | 1000 | 11.36 |
| Cellulose | 200 | 2.27 |
| Eau | 5000 | 56.81 |

### 2.2. Procédure

- mettre en solution l'éthylcellulose dans le dichlorométhane en agitant pendant environ 15 minutes (Solution I)
- disperser les billes de verre, puis une partie de la cellulose dans la solution I (Solution II)
- mettre en suspension la cellulose restante dans l'eau (Suspension III)
- mélanger la solution (II) et la suspension (III) en agitant vigoureusement.

La dispersion est réalisée par l'utilisation d'un mixer à pales et sur une quantité d'échantillon variant entre 5 et 8,5 litres.

### 2.3. Séchage par atomisation

Avant l'atomisation, une fois que la chambre est séchée et qu'elle atteint la température voulue, il est conseillé de commencer par l'injection d'eau dans l'atomiseur via une pompe péristaltique. A ce moment, on observe une chute de température de sortie due à l'évaporation de l'eau à l'intérieur de la chambre. Il est facile de contrôler la température de sortie en faisant varier le débit du liquide injecté. Une fois la température stabilisée après environ 10 minutes, on peut commencer l'injection de la dispersion.

Les conditions d'atomisation sont les suivantes :
- atomiseur PC3 à buse
- pression d'air comprimé : 1,2 bars
- température d'entrée : 180°C
- température de sortie : 90°C

La poudre est récoltée dans un récipient fixé à la base du cyclone.

### 2.4. Etude de la dispersibilité de la poudre Matériel et méthode + résultats

### 2.5. Etude de la structure par microscopie électronique Matériel et méthode + résultats

### Exemple 2: Utilisation de l'aide de filtration

Selon l'invention, on envisage la filtration du liquide alimentaire en 2 étapes consécutives, sauf, si une étape de préfiltration (centrifugation par exemple) a permis de réduire la charge en impuretés dans le liquide à filtrer.
1) Filtration ou préfiltration, dont le but est de réduire la charge depuis la valeur initiale (environ 5.10⁶ cellules/ml) jusqu'à une population en levures inférieure à 500.000 cellules/ml)
2) Clarification dont le but est l'obtention d'une filtration stérile (population en levures inférieure à 5 cellules / 1).
3) Clarification et stabilisation simultanées par ajout de PVPP au produit de l'exemple 1

### Matériel :

- filtre de laboratoire à bougie Meura MS
- adjuvant de filtration P7/P8
- bière
- levures

### Procédure :

### a. Filtration

Dans un premier temps, le filtre est rempli d'eau et désaéré. Ensuite, on a réalisé un dépôt préalable à la filtration d'une précouche d'adjuvant sur le support-filtrant. Une fois la précouche formée, la filtration peut commencer, durant laquelle des quantités supplémentaires d'adjuvants (alluvionnage) sont déposées sur la précouche en même temps que la matière à filtrer, afin de retarder au maximum le moment où l'adjuvant est saturé en impuretés.

En fin de filtration, on pousse la bière à l'eau et on procède au débâtissage. Celui-ci s'effectue par l'envoi d'un mélange eau-air à contre courant par l'intérieur des supports filtrants. Ce nettoyage à contre-courant permet d'assurer un décollement parfait du gâteau de filtration du support filtrant et un nettoyage optimal de celui-ci.

### b. Régénération

- en fin de filtration, laver le gâteau à l'eau froide, puis à l'eau chaude à 80 °C
- débâtir et remettre le gâteau en suspension dans un bac de régénération
- agiter la suspension pendant ± 5 min. puis la laisser se décanter pendant 20 à 30 min. et éliminer le surnageant.
- remettre la suspension dans une solution de soude caustique de 2% et à 80 °C pendant minimum 90 minutes et en agitant
- neutraliser l'adjuvant avec une solution acide (acide phosphorique 0,5%)
- rincer le gâteau à l'eau pour une nouvelle filtration.
- dans le cas d'une régénération difficile ou incomplète, un traitement complémentaire de l'adjuvant peut être nécessaire, soit par une décantation supplémentaire, soit par l'utilisation d'enzymes afin d'éliminer complètement des levures.

### Conditions opératoires et résultats :

### a. Filtration

### Filtration de bière avec échantillon P7/P8

- précouche : 2 kg/m²
- débit de filtration : 10 hl/hm²
- alluvionnage : 300 g/hl
- surface filtrante : 0,011 m²
- population en levures à l'entrée : 5 à 6M cellules/ml
- population en levures à la sortie : < 500.000 cellules/ml

### Tableau 1 : filtration de bière avec l'aide filtrante de l'invention.

Le suivi de la qualité du filtrat et des courbes d'évolutions de la pression différentielle donne une estimation de l'efficacité de la régénération de l'aide filtrante.

Ces essais concernent des cycles de filtration successifs dans des conditions similaires, entre lesquels une régénération de l'adjuvant est effectuée.

La bière à filtrer contient de 5 à 7.10⁶ cellules de levures par millilitre et les populations mesurées en aval du filtre (comptage au microscope au cellule de Burker) indiquent un bon pouvoir filtrant c'est-à-dire une population inférieure à 500.000 cellules/ml. (objectif de la filtration).

Les pressions différentielles tendent à augmenter après les premières régénérations puis se stabilisent après quelques cycles.

### b. Clarification et stabilisation

- précouche : 500 g/m² échantillon P + 500 g/m² PVPP
- alluvionnage : 30 g/hl échantillon P + 30 g/hl PVPP
- population in : résultat de la filtration grossière (<500.000 cellules/ml)
- population out : mesurée par filtration de 200 ml de filtrat sur membrane en acétate de cellulose, suivie d'un ensemencement sur gélose nutritive et incubation à 30 °C.

Selon l'invention, l'adjuvant est de même fabrication que celui utilisé en filtration, mais il comporte des billes de 44 à 63 µm et des fibres de 15 à 60 µm. De plus, on y ajoute des fibres de PVPP (Polyvinyl Polypyrrolidone) de manière à réaliser la stabilisation de la bière simultanément à la clarification.

Selon l'invention, le PVPP a le rôle de capter les polyphénols de la bière de façon à réduire les liens polyphénols-protéine, responsables du trouble à froid de la bière. Ces fibres de PVPP sont régénérables par la même procédure que les microbilles fibrillées.

Dans le cas de la clarification, la régénération de l'adjuvant est plus aisée car la charge en impuretés retenue par le gâteau est plus faible.

La bière à filtrer contient un maximum de 500.000 cellules/ml et les populations en levures dans le filtrat doivent être inférieures à 5 cellules/l.

On constate une évolution lente et progressive de la pression différentielle qui semble stable au cours des cycles successifs de clarification (Tableau II).

## Revendications

1. Aide de filtration régénérable caractérisée en ce qu'elle est constituée de microbilles de verre ou de polymères et/ou de fibres essentiellement de cellulose ou de polymère enrobées par un polymère hydrophobe insoluble en phase aqueuse.

2. Aide de filtration selon la revendication 1 caractérisée en ce que le polymère insoluble est de l'éthylcellulose, du carboxyméthylcellulose ou du polyéthylène.

3. Aide de filtration selon la revendication 1 caractérisée en ce qu'il comporte d'autres constituants, tel que de la cellulose des fibres de polymères (PE, PP...), dans la matière d'enrobage.

4. Aide de filtration selon l'une quelconque des revendications 1 à 3 caractérisée en ce que la taille des particules varie de 1 à 150 micromètres, préférentiellement de 20 à 80 micromètres.

5. Aide de filtration selon l'une quelconque des revendications 1 à 4 caractérisée en ce que le substrat recevant l'enrobage est constitué par des billes de verre pleines ou creuses en fonction de la densité désirée ou des billes de polyoléfine.

6. Aide de filtration selon l'une quelconque des revendications 1 à 5 caractérisée en ce que le produit d'enrobage utilisé confère une charge positive aux particules constituant l'aide filtrante.

7. Aide de filtration selon l'une quelconque des revendications 1 à 6 caractérisée en ce que l'enrobage est peut-être un enrobage partiel.

8. Aide de filtration selon l'une quelconque des revendications 1 à 7 caractérisée en ce qu'il présente une densité réelle de 0.9 à 2 et une résistance mécanique suffisante permettant au moins 10 opérations de régénération.

9. Aide de filtration selon l'une quelconque des revendications 1 à 8 caractérisée en ce que l'aide filtrante comporte d'autres constituants tels que des fibres de cellulose ou de polymère, ces constituants complémentaires étant réalisés sous forme d'un mélange homogène des substrats microencapsulés avec des fibres non enrobées.

10. Procédé de préparation d'une aide de filtration régénérable selon l'une quelconque des revendications 1 à 9 caractérisé en ce qu'on réalise un séchage par atomisation (spray drying) du substrat (constitué de microbilles ou de fibres) et de l'agent d'enrobage dans un solvant volatil, de préférence le dichlorométhane, dans une phase aqueuse contenant éventuellement d'autres ingrédients tels que des fibres de cellulose ou de polymère.

11. Procédé selon la revendication 10 caractérisé en ce qu'on réalise un enrobage partiel ou total en agissant sur les proportions relatives du substrat et du produit d'enrobage en tenant compte de l'adjonction éventuelle d'autres ingrédients.

12. Procédé selon la revendication 10 ou 11 caractérisé en ce que le séchage par atomisation est réalisé selon le principe décrit dans le document EP-0462003-B1 précité.

13. Procédé selon la revendication 12 caractérisé en ce que l'enrobage s'effectue en une seule étape.

14. Procédé selon l'une quelconque des revendications 10 à 13 caractérisé en ce qu'on provoque simultanément l'enrobage d'autres constituants, notamment de fibres de cellulose ou de polymère.

15. Procédé selon l'une quelconque des revendications 10 à 14 caractérisé en ce qu'on met en oeuvre une solution organique de polymères contenant de 1 à à 10, et de préférence 1,4 à 10% en poids de polymères et entre 22 et 25% en poids de microbilles, et entre 7 et 20% en poids de fibres (cellulose ou polymères).

16. Procédé selon la revendication 15 caractérisé en ce que la phase aqueuse contient entre 1 et 15% en poids de fibres, notamment de fibres de cellulose.

17. Procédé selon l'une quelconque des revendications 10 à 16 caractérisé en ce qu'on réalise un premier mélange de la solution organique d'agent enrobant avec des billes de verre et/ou des fibres (cellulose, PE, PP, ...) et un deuxième mélange de fibres avec de l'eau puis on mélange lesdits premier et deuxième mélanges entre eux.

18. Procédé selon l'une quelconque des revendications 10 à 17 caractérisé en ce que la microencapsulation et le séchage de l'aide de filtration sont réalisés en une seule étape.

19. Utilisation du produit selon l'une quelconque des revendications 1 à 9 dans la filtration avec aide filtrante en précouche et/ou en alluvionnage.

20. Utilisation du produit selon la revendication 19 caractérisée en ce qu'on utilise l'aide filtrante en précouche à raison de 500 à 3000 g/m² de surface de filtration et la quantité d'alluvionnage étant de 50 à 400 g/hl.

21. Utilisation du produit selon la revendication 19 ou 20 pour la filtration des liquides alimentaires tels que la bière, le vin ou les boissons non alcoolisées. Utilisation du produit selon la revendication 19 à 21 comportant des étapes de régénération.

22. Utilisation du produit selon la revendication 22 comportant tout ou partie des étapes de régénération suivantes : lavage à l'eau chaude, lavage alcalin, décantation, neutralisation acide, traitement enzymatique.
